# EUROPEAN PATENT SPECIFICATION

(11) **EP 1 394 745 B1**
(45) Date of publication and mention of the grant of the patent: **15.03.2006**
(21) Application number: 02019211.8
(22) Date of filing: 27.08.2002
(51) Int. Cl.: G06T 9/00

(54) **Determining usability of a coded file for an application**
Bestimmung der Brauchbarkeit der Anwendung eines komprimiertes Dateisystems
Determination de la possibilité d'utilisation pour une application d'un fichier compressé

(43) Date of publication of application: 03.03.2004
(73) Proprietor: Sony Ericsson Mobile Communications AB, 221 88 Lund (SE)
(72) Inventor: Sundström, Henrik, 24561 Staffanstorp (SE)
(74) Representative: Dahnér, Christer

(56) References cited:
- EP-A- 0 311 807
- WO-A-01/35622
- WO-A-01/59706
- US-A- 5 745 909

## Description

### TECHNICAL FIELD OF THE INVENTION

The present invention relates to the field of computer communication and telecommunication. More particularly the present invention relates to a method and an electronic device for determining usability of a coded file in an application for enabling faster decisions about using the file in the application as well as a computer readable medium including program code for performing said method and a computer program element including such code.

### DESCRIPTION OF RELATED ART

It is known within the field of computers and wireless communication to send different types of messages including coded files, like e-mail, MMS (Multimedia Messaging) and EMS (Enhanced Short Message Service or Enhanced SMS). The coded files can for example be video-files, pictures (still and moving) as well as sound files.

Such files can be downloaded and saved in portable electronic equipment such as mobile phones or different types of stationary or portable computers. It is also possible to generate such files locally in the device itself. An MMS file is a multimedia file, which is not a coded file in itself. It can however contain different types of media files, which are normally coded with some type of coding algorithm.

When using an application like MMS or EMS, it is today not possible to directly see if a coded file can be used in the application, as for instance to be sent in an MMS message without opening the file and decoding it. This decoding takes up time and resources in the electronic device in case files that cannot be used by the application have to be decoded in order to find out that it is not suitable each time the application is to use the file.

It is known to include information about a file in the header of the file. For example EP1052598 describes a mobile terminal that can receive images and a document containing image information associated with the images from a server. This allows a user to identify the image. The image information is described as being the storage location of the image. The document also describes resizing an image in the mobile terminal for use as background.

WO 01/35622 describes an MMS-system, where messages of different media types can be sent to a mobile communication device from a system. The system can sort messages and filter these according to user's profile/preferences/usage based on urgency, topic, sender etc.

WO 01/86986 describes downloading of multimedia data from a network or the Intemet to a mobile phone. Information of type of media of a multimedia file is included in the header of the multimedia file. This information in the header includes information on the length of the multimedia file, as well as information on the types of media files included in the multimedia file.

The documents describe terminals and devices where coded files are already used in applications and not their applicability before being used In an application.

EP 0 311 807 describes an information scanner apparatus provided with a scanner and a magnetic disc. The scanner supplies image data, while the magnetic disc supplies code data such as document data and drawing data. The apparatus stores the image data and the code data into the optical disc, each being provided with a flag indicating a type of the data per se, image data or code data.

None of the described documents thus describe anything that can be used in order to quicken up selection of a coded file for use in an application in order to save time. There is thus a need for a solution that makes it possible to instantly know which coded files can be used in an application when trying to use such files in said application.

### SUMMARY OF THE INVENTION

When a coded file is to be used in an application, like MMS. there is a problem of knowing if the file can be used or not without decoding the file.

The present invention is directed towards solving the problem of enabling faster selection of coded files to be used in an application without having to decode a file each time it is to be used.

This is achieved by obtaining at least one property of the file, matching the property against an application, generating an indication if the file can be used in the application and associating the coded file with the indication.

One object of the present invention is to provide a method, which enables faster selection of coded files to be used in an application without having to decode the file each time it is selected.

According to a first aspect of the present invention, the object is achieved by a method of determining usability of a coded file in an application including the steps of: obtaining at least one property of the coded file, matching the property against at least one application where the file could be used, generating an indication indicating if the file can be used in the application or not based on the matching, and associating the indication with the coded file for later enabling of fast decision about use of the file in the application.

A second aspect of the present invention is directed to a method including the features of the first aspect and further including matching of more than one property against each application and generating a flag indicating that the file can be used if all matched properties of the coded file can be used in the application.

A third aspect of the present invention is directed towards a method including the features of the first aspect, wherein the file is an image file.

A fourth aspect of the present invention is directed towards a method including the features of the first aspect, wherein the file is a sound file.

A fifth aspect of the present invention is directed towards a method including the features of the first aspect, and further comprising the step of checking the indication before using the file in an application associated with the indication.

A sixth aspect of the present invention is directed towards a method including the features of the first aspect, wherein the properties are obtained through decoding the coded file.

Another object of the present invention is to provide an electronic device, which enables faster selection of coded files to be used in an application without having to decode a file each time it is selected.

According to a seventh aspect of the present invention, this object is achieved by an electronic device for determining usability of a coded file in an application comprising: at least one file matching unit associated with an application and arranged to receive at least one property of a coded file, match the property against the application, generate an indication indicating if the file can be used in the application or not based on the matching, and associate the indication with the coded file for later enabling fast decision about use of the file in the application.

An eighth aspect of the present invention is directed towards an electronic device including the features of the seventh aspect and further including a file property extractor for obtaining said at least one property of the coded file.

A ninth aspect of the present invention is directed towards an electronic device including the features of the eighth aspect, wherein the file property extractor is further arranged to extract more than one property of the file and the file matching unit is arranged to match all extracted properties relevant to the application.

A tenth aspect of the present invention is directed towards an electronic device including the features of the eight aspect, wherein the file property extractor is further arranged to store the property after extraction.

An eleventh aspect of the present invention is directed towards an electronic device including the features of the eighth aspect, wherein the file property extractor is a file decoder.

A twelfth aspect of the present invention is directed towards an electronic device including the features of the seventh aspect and further including an application unit arranged to check the corresponding indication before using said coded file.

A thirteenth aspect of the present invention is directed towards an electronic device including the features of the seventh aspect, wherein there is more than one file matching unit and each such unit is associated with a corresponding application.

A fourteenth aspect of the present invention is directed towards an electronic device including the features of the seventh aspect, wherein the device is a portable communication device.

A fifteenth aspect of the present invention is directed towards an electronic device including the features of the fourteenth aspect, wherein the device is a cellular phone.

Yet another object is to provide a program product, which enables faster selection of coded files to be used in an application without having to decode the file each time it is selected.

According to a sixteenth aspect of the invention this object is achieved by a computer program product comprising a computer readable medium, having thereon: computer program code, to make a computer or an electronic device execute, when said program is loaded in the computer or the electronic device: obtaining of at least one property of the coded file, matching of the property against at least one application where the file could be used, generation of an indication indicating if the file can be used in the application or not based on the matching, and association of the indication with the coded file for later enabling of fast decision about use of the file in the application.

Yet another object is to provide a computer program element, which enables faster selection of coded files to be used In an application without having to decode the file each time it is selected.

According to a seventeenth aspect of the invention, this object is achieved by a computer program element comprising: computer program code to make a computer or an electronic device execute: obtaining of at least one property of the coded file, matching of the property against at least one application where the file could be used, generation of an indication indicating if the file can be used in the application or not based on the matching and association of the indication with the coded file for later enabling of fast decision about use of the file in the application.

The invention has the following advantages. With the generation of indications and association to a file it is possible to later use this information for speedier use of files in the different applications. If for instance a user of an MMS application wants to send an MMS message to a server and include a coded file, the MMS application might only allow the user of the apparatus to see the files having an associated indication, which makes it easier and faster to generate an MMS message. The application would then not need to have a file decoded by a decoder or the properties extracted before knowing if it can use the fife or not. It just checks the indication and then it knows whether it can use the file or not. With the present invention it is also possible to check a large set of files quickly concerning if they are applicable or not. Because an associated indication is checked instead of performing a complete decoding, less system resources are used than when decoding. This can be crucial for a memory consuming application.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows an electronic device in the form of a cellular phone,
fig. 2 shows the phone in fig. 1 connected to a server via a cellular network,
fig. 3 shows a block schematic of the parts relevant to the invention in the interior of the phone in fig. 1,
fig. 4 shows a flow chart of a method of performing the method according to a preferred embodiment of the invention,
fig. 5 shows a table with a number of files tagged with information indicating their applicability for two different applications,
fig. 6 shows a flow chart of some parts of the method according to the invention in more detail, and
fig. 7 shows a CD Rom on which program code for executing the method according to the invention is provided.

### DETAILED DESCRIPTION OF EMBODIMENTS

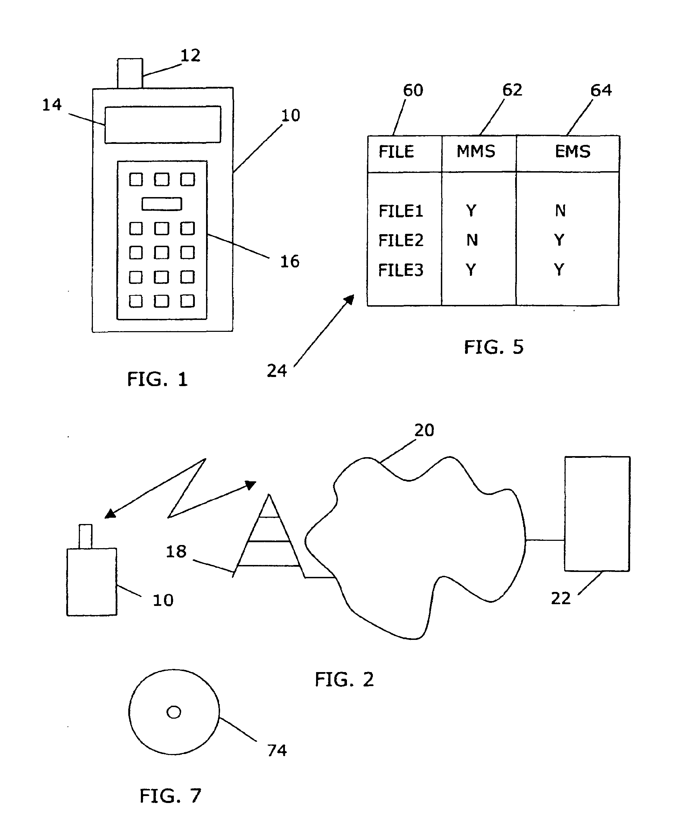

An electronic equipment or device 10 according to the invention is shown in fig. 1. In the preferred embodiment the device is a cellular phone 10 having an antenna 12, a display 14 and a keypad 16 including a number of keys. Apart from making and receiving telephone calls, the keypad 16 is used for entering information such as selection of functions and responding to prompts and the display 14 is used for displaying functions and prompts to a user of the phone. The antenna 12 is used for communication with other users via a network. A cellular phone is just one example of a device in which the invention can be implemented. The invention can for instance also be used in a PDA (personal digital assistant), a palm top computer, a lap top computer and even on a regular stationary computer such as a PC (personal computer).

Fig. 2 shows the cellular phone 10 connected to a cellular network 20 via a base station 18 for communication with a server 22 also connected to the network 20. The network is normally a GSM-type of network or a GPRS network. It is of course also possible that the network is WCDMA network. The server 22 is a server, which can receive MMS (Multimedia Messaging) and/or EMS (Enhanced SMS) messages. It should be realised that the phone 10 could just as well communicate with another phone, a PDA or a computer via the network. The server 22 can also be directly connected to the cellular network 20, or be connected to it via some other network. The network does of course not have to be a cellular network but can be some other type of network, such as Internet, a corporate intranet, a LAN or a wireless LAN. It can also be a so-called PSTN (Public Switched Telephone Network). This figure has been enclosed for showing an environment in which the invention can be provided. It should however be realised that the application need not require communication with other devices, in which case the connection via a network might not be necessary.

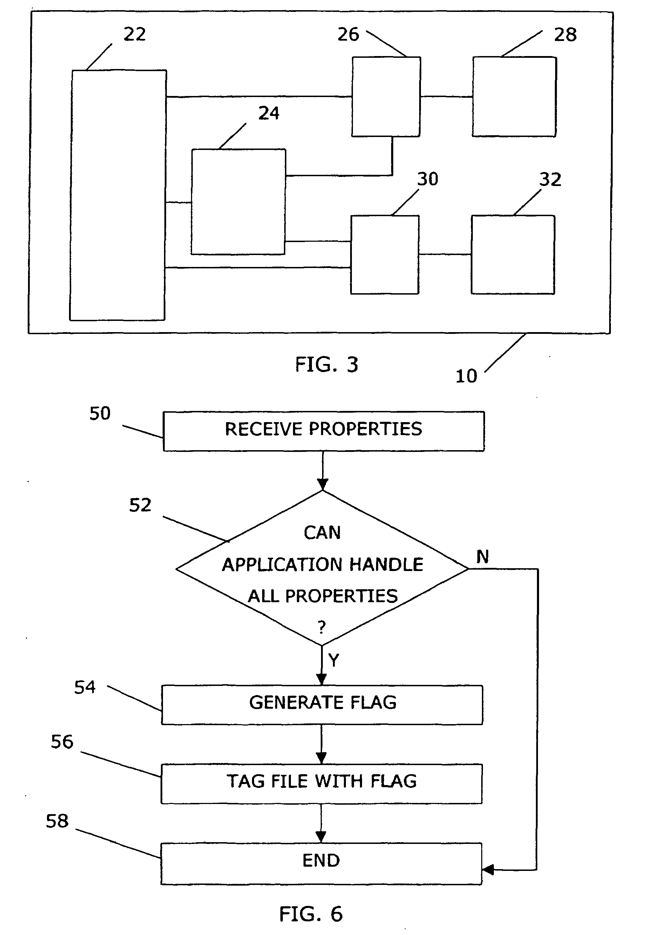

Fig. 3 shows part of the interior of the cellular phone that is relevant for the present invention. The phone 10 includes a file property extractor 22, which in the preferred embodiment is a decoder for coded files. Examples of such decoders are JPEG decoders for JPEG files. In the following the example of how the invention functions will be described with reference made to JPEG, although the invention is in no way limited to this type of file or its decoder. To the decoder 22 is connected a file store 24 in which different files are stored. The decoder 22 is connected to a first file matching unit 26, which in turn is connected to a first application unit 28 which handles an MMS application. The decoder 22 is also connected to a second file matching unit 30, which in turn is connected to a second application unit 32, which handles an EMS application. The two file matching units 26, 30 are connected to the file store 24.

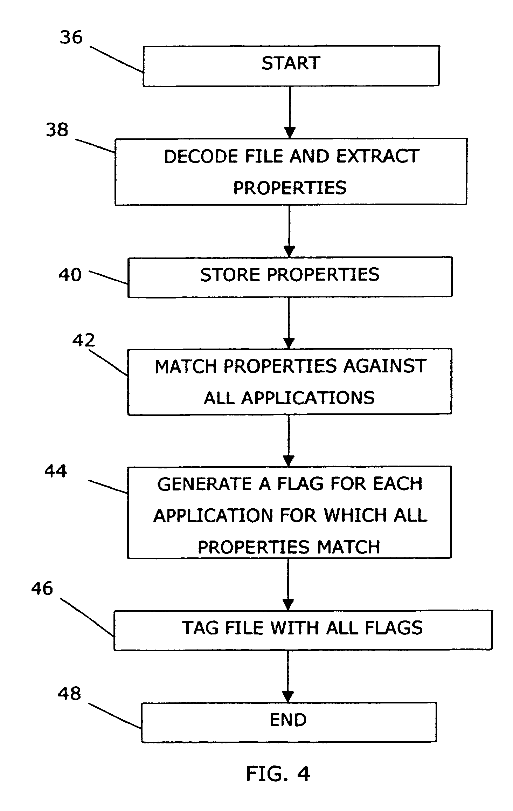

Fig. 4 shows a flow chart of the method according to the invention.

Fig. 5 shows the file store 24 containing three columns file, 60, MMS 62 and EMS 64, where tags for the applications MMS and EMS have been added to three files, file1, file2 and file3. The presence of a tag is indicated with a Y for yes and no tag is indicated with an N for no.

A preferred embodiment of the present invention will now be explained with reference to fig. 3, 4 and 5. This embodiment is also believed to be the best mode of the invention at the moment. The mobile phone 10 has a number of coded files in the file store 24. In fig. 5 there is shown three such files, where a first file file1 is a JPEG-file, a second file file2 is a GIF-file and a third file file3 is an MPEG file. These files could have been placed in the store in several different ways. They could have been downloaded via a WAP or Internet browser, received via e-mail, MMS or EMS, downloaded some other way, been generated locally in the phone or provided in the phone beforehand. The method of the invention starts by the decoder 22 retrieving a file, file1, from the file store, since it is a JPEG file, step 36. The file is then decoded in the decoder 22 and in the process of decoding the file different properties are extracted, step 38. The properties are then stored in the file store 24 in an area associated with the file, step 40. For a JPEG-file these properties can be colour depth, width of the picture, height of the picture, information about if the image includes animation and type of coding, although other properties are also feasible. The different properties are then forwarded from the decoder 22 to both the first and the second file matching units 26, 30. In the first and second file matching units 26, 30 the properties are matched against the requirements in the MMS application and the EMS application, step 42. This means that all relevant properties are checked against the capability of the application in question. The two file matching units generate indications and in this preferred embodiment flags if all the selected properties are matched, step 44, and thereafter the two file matching units associates or tags the file with the flags generated or associates the files with the flags, if there are any, step 46. Thereafter the method ends, step 48.

Fig. 6 shows a flow chart, which shows in more detail how the matching and tagging is done in a file matching unit. First the properties are received from the decoder, step 50. If all the properties can be handled by the application unit, step 52, a flag is generated, step 54. Matching can be done in the following way. For instance, if the colour depth is matched in the first file matching unit 26, i.e. if the file is a colour picture, in which the depth can be of 256 different colours, this is matched to the abilities of the MMS application to include colours. In the same way the other properties are checked, like width and height of the picture as well as format of the file, i.e. JPEG in the example given. Another possible property is if the image contains animations. In the present case all of the properties of the file file1 were being matched or could be handled by the application and the column 62 of the file store receives a Y for the MMS application from the first file matching unit. Thus a flag is generated if all the properties are matched, step 54, and also tagged to the file in question, step 56. Thereafter the method is ended, step 58. If the application could not handle all properties, step 52, no flag is generated and the method is ended, step 58. This can be exemplified by the second file matching unit 30, which has also received the properties from the decoder. In the example given above, the file file1 was a colour image and therefore the EMS application cannot handle the file, since it only handles black and white images, i.e. images with a colour depth of 1. Therefore this application cannot generate a flag, which is indicated in column 62 of the file store with an N.

The file store 24 includes two more coded files for which the same process has been run, so that file2 can be used in both the applications, while file3 cannot be used in any.

With this tagging of files it is possible to later use this information for speedier use of files in the different applications. When for instance a user of the MMS application later wants to send an MMS message, for instance to server 22, and include a coded file, the MMS application might only allow the user of the apparatus to see the files having a tag, which makes it easier and faster to generate an MMS message. The application would then not need to have a file decoded by a decoder or the properties extracted before knowing if it can use the file or not. It just checks the flag and then it knows whether it can use the file or not.

With the present invention it is also possible to check a large set of files quickly concerning if they are applicable or not. Because a tag is checked instead of performing a complete decoding, less system resources are also used than when decoding. This can be crucial for a memory consuming application.

It should be realised that there might be more decoders present than what is shown in fig. 3. In this case all the decoders are connected to all file matching units as well as to the file store in order to be able to generate flags for all applications. In the same way it is possible to have more applications than what has been described here. In this case each application will have its own file matching unit connected both to the application unit as well as to all decoders and the file store. The applications are also not limited to message sending related applications like MMS or EMS. Examples of other possible applications are web or WAP browsers, and document handling applications. Other examples are an image editor putting a limitation on image size or a MIDI music editor that puts a limitation on the number of tracks it supports. The invention is generally possible to use with any application that accepts an encoded file and puts limitations on the allowed input files

The file property extractor need not be a complete decoder, but other suitable means are possible. What is important is that the properties can be extracted from the coded file, which might not be necessary through decoding the whole file. It might for instance be sufficient to only extract the information in the header of the file.

The indications were here provided in the form of flags, i.e. a bit having a value of 1 if the properties can be handled by the application and no bit, i.e. a zero, if it cannot be handled. There are of course many possible variations to this, even though a flag is the easiest and perhaps best way to indicate the applicability of a coded file. Other examples are a string, an integer value or even composite data types. With these indications all relevant properties can be made visible to an application without decoding. The flags are in the preferred embodiment provided in an area directly associated with the file in the file store. They need not necessarily be provided there, they can for instance also be provided in the coded file itself or in a separate table or database. A positive flag or a bit indicating applicability was here used for indicating that a file could be used in an application. A negative flag, i.e. a bit indicating that the file cannot be used in the application, could just as well be used instead.

It is furthermore not necessary to forward all properties to a file matching unit. Only those properties that are relevant to the application need be forwarded.

The example given above was of a coded image file of the JPEG format. The invention is equally as well applicable for other types of image files as well as for other types of coded files such as different type of sound files, like for instance Wav-files.

According to the invention the obtained properties of a coded file were stored for later use in addition to the storing of the flag. Because of this storing of the properties a new flag can be generated more easily if a new application is downloaded into the phone. For some applications steps 38 and 40 of fig. 4 could then be a bit different. Then the already extracted properties would be fetched from an area of the file store by a file matching unit without decoding, before properties are matched against an application. The step of storing might also be omitted from the method, but then the properties would have to be extracted each time a new application would need a flag. The properties need not be stored in the file store either, but can be stored in any suitable memory location.

The file matching unit does also not need to be a separate unit, but can be included as part of the application unit.

The present invention has been described in relation to an apparatus having file matching units. These and other parts of the invention, like at least part of the file property extractors, can also be provided in the form of one or more processors with corresponding program memories containing suitable software code. The software for performing the method can also be provided on a computer readable medium like a disc 74 of the CD ROM type as depicted in fig. 7 or on some other type. In this case the software for performing the method when loaded into the phone or a computer will be provided on this disc. The program code can also be downloaded remotely from a server either outside or inside the cellular network or be downloaded via a computer like a PC to which the phone is temporarily connected.

The phone in this description uses radio circuits in order to communicate with other devices. These radio circuits have however not been described here since they are not really part of the invention and since this communication is performed in a way already known within the art.

## Claims

1. Method of determining usability of a coded file (file1) in an application that allows the use of a certain type of file, but has limitations regarding the properties of this type of file, including the step of:
obtaining at least one property of the coded file (step 38, step 50),
**characterised by** the further steps of
matching the property against at least one such application where the file could be used (step 42, 52),
generating an indication indicating if the file can be used in the application or not based on the matching (step 44, 54), and
associating the indication with the coded file for later enabling or fast decision about use of the file in the application (step 46, 56).

2. Method according to claim 1, wherein more than one property is matched against each application and generating a flag indicating that the file can be used if all matched properties of the coded file can be used in the application.

3. Method according to claim 1 or 2. wherein the file is an image file.

4. Method according to claim 1 or 2, wherein the file is a sound file.

5. Method according to any previous claim, comprising the step of checking the indication before using the file in an application associated with the indication.

6. Method according to any previous claim, wherein the properties are obtained through decoding the coded file.

7. Electronic device (10) for determining usability of a coded file in an application that allows the use of a certain type of file, but has limitations regarding the properties of this type of file comprising:
at least one file matching unit (26, 28) associated with an application and arranged to
receive at least one property of a coded file,
**characterised in that** the file matching unit is further arranged to
match the property against the application,
generate an indication indicating ir the file can be used in the application or not based on the matching, and
associate the Indication with the coded file for later enabling fast decision about use of the file in the application.

8. Electronic device according to claim 7, further including a file property extractor (22) for obtaining said at least one property of the coded file.

9. Electronic device according to claim 8, wherein the file property extractor is arranged to extract more than one property of the file and the file matching unit is arranged to match all extracted properties relevant to the application.

10. Electronic device according to claim 8 or 9, wherein the file property extractor is arranged to store the property after extraction.

11. Electronic device according to any of claims 8 - 10, wherein the file property extractor is a file decoder.

12. Electronic device according to any of claims 7 - 11, further including an application unit (28, 32) arranged to check the corresponding indication before using said coded file.

13. Electronic device according to any of claims 7 - 12, wherein there is more than one file matching unit and each such unit is associated with a corresponding application.

14. Electronic device according to any of claims 7 - 13, wherein the device is a portable communication device.

15. Electronic device according to claim 14, wherein the device is a cellular phone.

16. . A computer program element comprising:
computer program code to make a computer or an electronic device execute obtaining of at least one property of a coded file,
**characterised in that** said code also makes said computer or electronic device execute
matching the property against at least one application where the file could be used, which application allows the use of a certain type of file, but has limitations regarding the properties of this type of file,
generating an indication indicating if the file can be used in the application or not based on the matching, and
associating the Indication with the coded file for later enabling of fast decision about use of the file In the application.

17. A computer program product (74) comprising a computer readable medium, having thereon at least one computer program element according to claim 16.

## Patentansprüche

1. Verwendbarkeitsbestimmungsverfahren für eine kodierte Datei (Datei 1) in einer Anwendung, welche die Verwendung eines bestimmten Dateityps erlaubt, jedoch Einschränkungen hinsichtlich der Eigenschaften dieses Dateityps aufweist, welches den nachfolgenden Schritt umfasst: das Aufnehmen mindestens einer Eigenschaft der kodierten Datei (Schritt 38, Schritt 50), **gekennzeichnet durch** die nachfolgenden weiteren Schritte: das Abgleichen der Eigenschaft mit mindestens einer solchen Anwendung, bei welcher die Datei verwendet werden kann (Schritt 42, 52), das Erzeugen einer Anzeige, welche anzeigt, ob oder ob nicht die Datei auf der Grundlage des Abgleichens (Schritt 44, 54) verwendet werden kann, und das Verknüpfen der Anzeige mit der kodierten Datei, um später eine schnelle Entscheidung über die Verwendung der Datei in der Anwendung (Schritt 46, 56) zu ermöglichen.

2. Verfahren gemäß Anspruch 1, bei welchem mehr als eine Eigenschaft mit jeder Anwendung abgeglichen wird, und ein Flag erzeugt wird, welches anzeigt, dass die Datei verwendet werden kann, wenn alle abgeglichenen Eigenschaften der kodierten Datei in der Anwendung verwendet werden können.

3. Verfahren gemäß Anspruch 1 oder 2, bei welchem die Datei eine Bilddatei ist.

4. Verfahren gemäß Anspruch 1 oder 2, bei welchem die Datei eine Sounddatei ist.

5. Verfahren gemäß einem vorherigen Anspruch, welches einen Anzeigeprüfschritt umfasst, bevor die Datei in einer Anwendung verwendet wird, welche mit der Anzeige verknüpft ist.

6. Verfahren gemäß einem vorherigen Anspruch, bei welchem die Eigenschaften aufgenommen werden, indem die kodierte Datei dekodiert wird.

7. Elektronikgerät (10) zur Verwendbarkeitsbestimmung einer kodierten Datei in einer Anwendung, welche die Verwendung eines bestimmten Dateityps erlaubt, jedoch Einschränkungen hinsichtlich der Eigenschaften dieses Dateityps aufweist, welches umfasst: mindestens eine Dateiabgleicheinheit (26, 28), welche einer Anwendung zugeordnet ist, und angeordnet ist, um mindestens eine Eigenschaft einer kodierten Datei zu empfangen, **dadurch gekennzeichnet, dass** die Dateiabgleicheinheit weiter angeordnet ist, um die Eigenschaft mit einer Anwendung abzugleichen, eine Anzeige zu erzeugen, welche anzeigt, ob oder ob nicht die Datei auf der Grundlage des Abgleichens in einer Anwendung verwendet werden kann, und eine Anzeige mit der kodierten Datei zu verknüpfen, um später eine schnelle Entscheidung über die Verwendung der Datei in der Anwendung zu ermöglichen.

8. Elektronikgerät gemäß Anspruch 7, welches weiter einen Dateieigenschaftsextraktor (22) umfasst, um die genannte mindestens eine Eigenschaft der kodierten Datei aufzunehmen.

9. Elektronikgerät gemäß Anspruch 8, bei welchem der Dateieigenschaftsextraktor angeordnet ist, um mehr als eine Eigenschaft der Datei zu extrahieren, und die Dateiabgleicheinheit angeordnet ist, um alle für die Anwendung relevanten extrahierten Eigenschaften abzugleichen.

10. Elektronikgerät gemäß Anspruch 8 oder 9, bei welchem der Dateieigenschaftsextraktor angeordnet ist, um die Eigenschaft nach Extraktion zu speichern.

11. Elektronikgerät gemäß einem der Ansprüche 8 bis 10, bei welchem der Dateieigenschaftsextraktor ein Dateidekoder ist.

12. Elektronikgerät gemäß einem der Ansprüche 7 bis 11, welches weiter eine Anwendungseinheit (28, 32) umfasst, welche angeordnet ist, um die entsprechende Anzeige zu prüfen, bevor die genannte kodierte Datei verwendet wird.

13. Elektronikgerät gemäß einem der Ansprüche 7 bis 12, bei welchem mehr als eine Dateiabgleicheinheit vorhanden ist, und jede solche Einheit einer entsprechenden Anwendung zugeordnet ist.

14. Elektronikgerät gemäß einem der Ansprüche 7 bis 13, wobei das Gerät ein tragbares Kommunikationsgerät ist.

15. Elektronikgerät gemäß Anspruch 14, wobei das Gerät ein Mobiltelefon ist.

16. Computerprogrammelement, welches umfasst: einen Computerprogrammkode, um zu bewirken, dass ein Computer oder ein Elektronikgerät das Aufnehmen von mindestens einer Eigenschaft einer kodierten Datei ausführt, **dadurch gekennzeichnet, dass** der genannte Kode außerdem bewirkt, dass der genannte Computer oder das genannte Elektronikgerät ausführt, das Abgleichen einer Eigenschaft mit mindestens einer Anwendung, in welcher die Datei verwendet werden kann, wobei die Anwendung die Verwendung eines bestimmten Dateityps erlaubt, jedoch Einschränkungen hinsichtlich der Eigenschaften dieses Dateityps aufweist, das Erzeugen einer Anzeige, welche anzeigt, ob oder ob nicht die Datei auf der Grundlage des Abgleichens in der Anwendung verwendet werden kann, und das Verknüpfen der Anzeige mit der kodierten Datei, um später eine schnelle Entscheidung über die Verwendung der Datei in der Anwendung zu ermöglichen.

17. Computerprogrammprodukt (74), welches ein für einen Computer lesbares Medium umfasst, auf welchem mindestens ein Computerprogrammelement gemäß Anspruch 16 gespeichert ist.

## Revendications

1. Procédé consistant à déterminer l'utilisabilité d'un fichier codé (fichier 1) dans une application qui autorise l'utilisation d'un certain type de fichier, mais possède des limitations en ce qui concerne les propriétés de ce type de fichier, comprenant les étapes consistant à ;
acquérir au moins une propriété du fichier codé (étape 38, étape 50),
**caractérisé par** les étapes supplémentaires consistant à
mettre en correspondance la propriété avec au moins une telle application dans laquelle le fichier pourrait être utilisé (étape 42, 52),
générer une indication indiquant si le fichier peut être utilisé dans l'application ou non sur la base de la mise en correspondance (étape 44, 54), et
associer l'indication au fichier codé pour autoriser ultérieurement une décision rapide à propos de l'utilisation du fichier dans l'application (étape 46, 56).

2. Procédé selon la revendication 1 dans lequel plus d'une propriété est mise en correspondance avec chaque application et générant un indicateur indiquant que le fichier peut être utilisé si toutes les propriétés mises en correspondance du fichier codé peuvent être utilisées dans l'application.

3. Procédé selon la revendication 1 ou 2 dans lequel le fichier est un fichier d'image.

4. Procédé selon la revendication 1 ou 2 dans lequel le fichier est un fichier de son.

5. Procédé selon l'une quelconque des revendications précédentes comprenant l'étape consistant à vérifier l'indication avant d'utiliser le fichier dans une application associée à l'indication.

6. Procédé selon l'une quelconque des revendications précédentes dans lequel les propriétés sont acquises à travers le décodage du fichier codé.

7. Dispositif électronique (10) destiné à déterminer l'utilisabilité d'un fichier codé dans une application qui autorise l'utilisation d'un certain type de fichier, mais qui possède des limitations en ce qui concerne les propriétés de ce type de fichier, comprenant :
au moins une unité de mise en correspondance de fichier (26, 28) associée à une application et configurée pour
recevoir au moins une propriété d'un fichier codé,
**caractérisé en ce que** l'unité de mise en correspondance de fichier est de plus configurée pour
mettre en correspondance la propriété et l'application,
générer une indication indiquant si le fichier peut être utilisé dans l'application ou non sur la base de la mise en correspondance, et
associer l'indication au fichier codé pour autoriser ultérieurement une décision rapide à propos de l'utilisation du fichier dans l'application.

8. Dispositif électronique selon la revendication 7 comprenant de plus un extracteur de propriété de fichier (22) destiné à acquérir ladite au moins une propriété du fichier codé.

9. Dispositif électronique selon la revendication 8 dans lequel l'extracteur de propriété de fichier est configuré pour extraire plus d'une propriété du fichier et l'unité de mise en correspondance de fichier est configurée pour mettre en correspondance toutes les propriétés extraites pertinentes pour l'application.

10. Dispositif électronique selon la revendication 8 ou 9 dans lequel l'extracteur de propriété de fichier est configuré pour stocker la propriété après extraction.

11. Dispositif électronique selon l'une quelconque des revendications 8 à 10 dans lequel l'extracteur de propriété de fichier est un décodeur de fichier.

12. Dispositif électronique selon l'une quelconque des revendications 7 à 11 comprenant de plus une unité d'application (28, 32) configurée pour vérifier l'indication correspondante avant d'utiliser ledit fichier codé.

13. Dispositif électronique selon l'une quelconque des revendications 7 à 12 dans lequel il existe plus d'une unité de mise en correspondance de fichier et chaque telle unité est associée à une application correspondante.

14. Dispositif électronique selon l'une quelconque des revendications 7 à 13 dans lequel le dispositif est un dispositif de communication portable.

15. Dispositif électronique selon la revendication 14 dans lequel le dispositif est un téléphone cellulaire.

16. Elément de programme informatique comprenant :
un code de programme informatique pour faire en sorte qu'un ordinateur ou un dispositif électronique exécute
l'acquisiton d'au moins une propriété d'un fichier codé
**caractérisé en ce que** ledit code fait aussi en sorte que ledit ordinateur ou dispositif électronique exécute
la mise en correspondance de la propriété avec au moins une application dans laquelle le fichier pourrait être utilisé, laquelle application autorise l'utilisation d'un certain type de fichier, mais possède des limitations en ce qui concerne les propriétés de ce type de fichier,
la génération d'une indication indiquant si le fichier peut être utilisé dans l'application ou non sur la base de la mise en correspondance, et
l'association de l'indication au fichier codé pour autoriser ultérieurement une décision rapide à propos de l'utilisation du fichier dans l'application.

17. Produit de programme informatique (74) comprenant un support lisible par ordinateur portant au moins un élément de programme informatique selon la revendication 16.
